# EUROPEAN PATENT SPECIFICATION

(11) **EP 2 561 958 B1**
(45) Date of publication and mention of the grant of the patent: **20.08.2014**
(21) Application number: 10850256.8
(22) Date of filing: 23.04.2010
(51) Int. Cl.: B23Q 17/20, B23Q 17/24, G05B 19/409, G05B 19/4097

(54) **SHAPE MEASUREMENT DEVICE FOR A WORKPIECE IN A MACHINE TOOL**
VORRICHTUNG ZUM MESSEN DER FORM EINES WERKSTÜCKS IN EINER WERKZEUGMASCHINE
DISPOSITIF DE MESURE DE FORME POUR PIÈCES À USINER PAR MACHINE-OUTIL

(43) Date of publication of application: 27.02.2013
(73) Proprietor: Mitsubishi Heavy Industries, Ltd., Tokyo 108-8215 (JP)
(72) Inventor: SUZUKI Kenichi, Ritto-shi Shiga 520-3080 (JP); KURA Kenji, Ritto-shi Shiga 520-3080 (JP); KAWAUCHI Naoto, Takasago-shi Hyogo 676-8686 (JP); SASANO Yuichi, Takasago-shi Hyogo 676-8686 (JP); MATSUMURA Akihiko, Ritto-shi Shiga 520-3080 (JP); OISHI Hiroshi, Ritto-shi Shiga 520-3080 (JP)
(74) Representative: Henkel, Breuer & Partner
(86) International application number: PCT/JP2010/057262
(87) International publication number: WO 2011/132315

(56) References cited:
- JP-A- 8 052 638
- JP-A- 2000 131 032
- JP-A- 2007 048 210

## Description

### TECHNICAL FIELD

The present invention relates to a shape measurement device configured to measure a shape of a workpiece being an object to be machined in a machine tool.

### BACKGROUND ART

In a machine tool, a workpiece being an object to be machined is fixed on a table and is machined into a predetermined shape with a tool mounted to a ram. The table is provided to be capable of reciprocating in a horizontal direction (X-axis direction). The ram is provided to be capable of reciprocating in a vertical direction (Z-axis direction). The ram is supported by a saddle. Columns are provided respectively on both sides of the table, and a cross rail extends between upper portions of the respective columns. The aforementioned saddle is supported by the cross rail to be capable of reciprocating in a horizontal direction (Y-axis direction) perpendicular to the X-axis direction. The movements in the directions of the respective axes are performed by using motors, and the motors for the respective axes are controlled by a NC (numerical control device).

In such a machine tool, data on a three-dimensional shape of a workpiece is sometimes inputted in the NC in advance when NC machining is performed. However, generation of the data requires a large amount of labor and time. To counter this, various devices are developed that make it easy to generate the data on the three-dimensional shape of the workpiece. For example, Patent Document 1 discloses a method of measuring a position of a workpiece and the like with a workpiece shape measuring instrument. It is conceivable to use data measured by this method as the data on the three-dimensional shape of the workpiece which is to be inputted into the NC.

Moreover, when the NC machining is performed in the aforementioned machine tool, there is a risk of a workpiece and machine parts (for example, a tool, a ram, and the like) of the machine tool interfering with each other due to an error in a NC program or an error in mounting the workpiece. As a method for preventing such interference from occurring, for example, Patent Document 1 discloses a method of measuring the position of a workpiece and the like with a workpiece shape measuring instrument, checking for a workpiece shape obtained based on measured data, and checking for interference between the workpiece and the machine parts of the machine tool when the machine tool moves in accordance with a movement instruction from a NC program.

### PRIOR ART DOCUMENT

### PATENT DOCUMENT

Patent Document 1: Japanese Patent Application Publication No. 2007-48210

JP 2000 131032 A discloses a method and a device for measuring a three-dimensional profile. In the method for obtaining the profile of an object to be measured by irradiating it with line laser light and measuring the varying state of reflected light through cameras, the plurality of cameras include cameras for rough measurement and cameras and for precise measurement. Rough measurement is performed by scanning the object once with a laser oscillator and the cameras and a first three-dimensional profile measurement data on the object is generated based on a first image data outputted from the rough measurement cameras. When the object is scanned with the precise measurement cameras, motion control data for moving the precise measurement cameras while keeping a specified distance from the surface of the object is generated from the first three-dimensional profile measurement data. Based on the motion control data, the object is scanned with the laser oscillator and the precise measurement cameras and precise measurement is performed by means of the precise measurement cameras and then a second three-dimensional profile measurement data on the object is generated based on the second image data outputted from the precise measurement cameras.

JP 8 052638 A discloses an interference check method, a machining program check method and a machining suitability check method. A three-dimensional shape of a machining material is measured by a three-dimensional measuring device, to acquire a machining material shape data, so as to acquire a mechanical shape data defined with the three-dimensional shape in a machine side including a spindle head mounted with a machining tool and a tool holder.

### SUMMARY OF THE INVENTION

### PROBLEMS TO BE SOLVED BY THE INVENTION

In the aforementioned method of measuring the position of a workpiece with the workpiece shape measuring instrument, although the shape of the workpiece can be measured, one workpiece shape measuring instrument cannot achieve both of measurement in a short time and measurement with high accuracy at the same time. When a high-accuracy sensor is used as the workpiece shape measuring instrument, a narrow measurement range of the sensor results in a long measurement time for the workpiece. Meanwhile, when a wide-range senor is used, a wide measurement range of the sensor makes a measurement time for the workpiece shorter than the case of using the high-accuracy sensor. However, measurement accuracy of the workpiece shape becomes lower than the case of using the high-accuracy sensor. Moreover, the three-dimensional shape of the workpiece obtained by the wide-range sensor has lower accuracy than that of the three-dimensional shape of the workpiece which is required to be inputted into the NC.

In addition, in the aforementioned method of checking for interference between the workpiece and the machine parts of the machine tool, although a collision between the workpiece and the machine parts of the machine tool can be prevented, the high-accuracy sensor and the workpiece may interfere with each other when the high-accuracy sensor is used as the workpiece shape measuring instrument. This is because the measurement range of the sensor is narrow and the sensor is a device which performs measurement in a state disposed at a position near the workpiece.

The present invention is proposed in view of the problems described above and an object thereof is to provide a workpiece shape measurement device for a machine tool which is capable of performing measurement in a shorter time than the case of using only a high-accuracy sensor and is capable of performing measurement of a predetermined portion with high-accuracy.

In addition, the present invention is proposed in view of the problems described above and an object thereof is to provide a workpiece shape measurement device for a machine tool which allows avoidance of interference between the workpiece and the high-accuracy sensor.

### MEANS FOR SOLVING THE PROBLEMS

According to the present invention, there is provided a workpiece shape measurement device for a machine tool as set out in independent claim 1.

### EFFECTS OF THE INVENTION

In the workpiece shape measurement device for a machine tool of the present invention, configuring the workpiece shape measurement device as described above makes it possible to measure the three-dimensional shape of the workpiece with the high-accuracy measuring means only for the predetermined portion and to measure the three-dimensional shape of the workpiece with the wide-range measuring means for portions other than the predetermined portion. This enables reduction in measurement time compared to the case where only the high-accuracy measuring means is used. Moreover, there is no need to prepare data on the three-dimensional shape of the workpiece in advance and measurement with high accuracy can be performed for the predetermined portion.

The workpiece shape measurement device for a machine tool of the present invention allows avoidance of the interference between the workpiece and the high-accuracy measuring means by including the interference judging means for judging whether there is interference between the workpiece and the high-accuracy measuring means on the basis of the data on the approximate three-dimensional shape of the workpiece and the data on the shape of the high-accuracy measuring means.

### BRIEF DESCRIPTION OF THE DRAWINGS

[Fig. 1] Fig. 1 is a block diagram of a workpiece shape measurement device for a machine tool of a first embodiment of the present invention.
[Fig. 2] Fig. 2 is a diagram showing a control flow of the workpiece shape measurement device for a machine tool of the first embodiment of the present invention.
[Fig. 3] Fig. 3 are explanatory views of the workpiece shape measurement device for a machine tool of the first embodiment of the present invention, in which part (a) of Fig. 3 shows a state where a wide-range sensor is mounted to a ram, part (b) of Fig. 3 shows an approximate shape of a workpiece which is based on measurement data from the wide-range sensor, part (c) of Fig. 3 shows a state where a high-accuracy sensor is mounted to the ram, and part (d) of Fig. 3 shows an overall shape of the workpiece which is generated by a workpiece model integrator.
[Fig. 4] Fig. 4 is a block diagram of a workpiece shape measurement device for a machine tool of a second embodiment of the present invention.
[Fig. 5] Fig. 5 is a diagram showing a control flow of the workpiece measurement device for a machine tool of the second embodiment of the present invention.
[Fig. 6] Fig. 6 are explanatory views of the workpiece shape measurement device for a machine tool of the second embodiment of the present invention, in which part (a) of Fig. 6 shows a state where a wide-range sensor is mounted to a ram, part (b) of Fig. 6 shows an approximate shape of a workpiece which is based on measurement data from the wide-range sensor, part (c) of Fig. 6 shows a state where a high-accuracy sensor is mounted to the ram, and part (d) of Fig. 6 shows a high-accuracy shape of the workpiece which is based on measurement data from the high-accuracy sensor.

### MODES FOR CARRYING OUT THE INVENTION

Detailed descriptions are given of embodiments of a workpiece shape measurement device for a machine tool of the present invention.

### [FIRST EMBODIMENT]

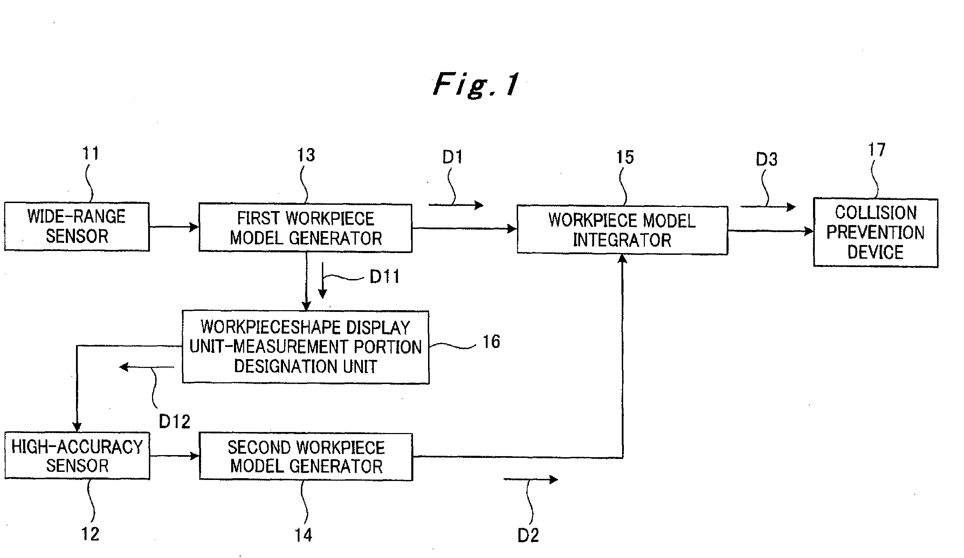

A first embodiment of a workpiece shape measurement device for a machine tool of the present invention is described with reference to Fig. 1, Fig. 2, and Fig. 3.

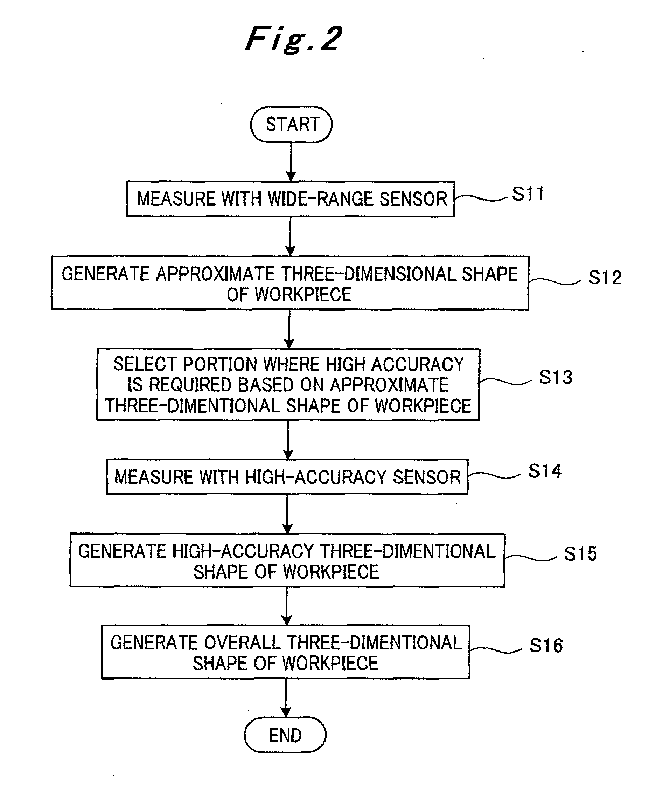

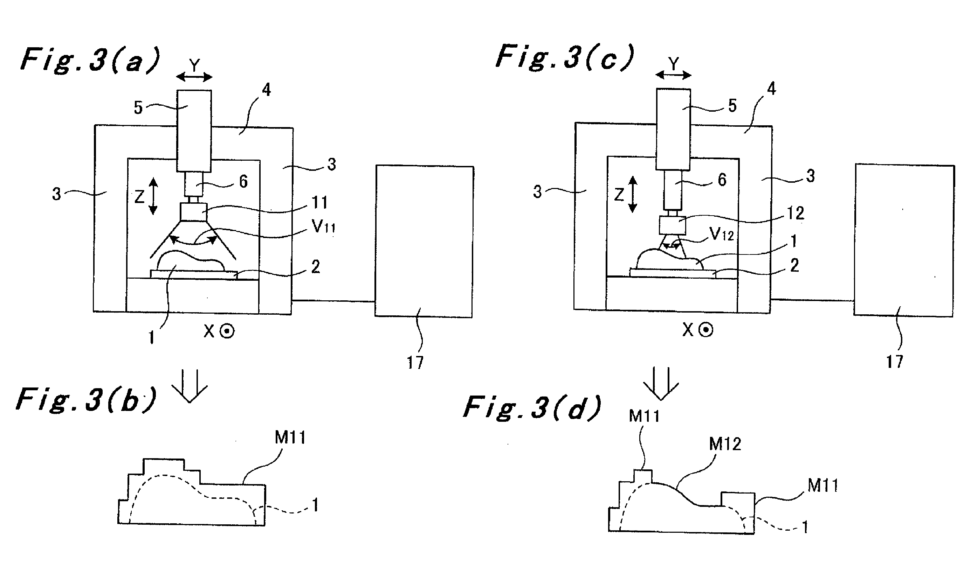

Fig. 1 is a block diagram of the workpiece shape measurement device for a machine tool of the first embodiment of the present invention. Fig. 2 is a diagram showing a control flow of the workpiece shape measurement device. Fig. 3 includes explanatory views of the workpiece shape measurement device for a machine tool of the first embodiment of the present invention. Part (a) of Fig. 3 shows a state where a wide-range sensor is mounted to a ram, part (b) of Fig. 3 shows an approximate shape of a workpiece which is based on measurement data from the wide-range sensor, part (c) of Fig. 3 shows a state where a high-accuracy sensor is mounted to the ram, and part (d) of Fig. 3 shows an overall shape of the workpiece which is generated by a workpiece model integrator.

In the embodiment, descriptions are given of the case where the wide-range sensor and the high-accuracy sensor are both used to measure the shape of a workpiece fixed to a table of a machine tool.

As shown in Fig. 3, for example, the machine tool of the embodiment is a double-column type machine tool and has a table 2 which reciprocates in a horizontal direction (a direction orthogonal to the paper sheet of the drawing: X-axis direction) and columns 3 which are provided respectively on both sides of the table 2. A cross rail 4 extends between upper portions of the respective columns 3 and a saddle 5 is supported by the cross rail 4 to be capable of reciprocating in a horizontal direction perpendicular to the X-axis direction (a right-left direction in the drawing: Y-axis direction) . A ram 6 is supported by the saddle 5 to be capable of reciprocating in a vertical direction (an up-down direction in the drawing: Z-axis direction). Moreover, reference numeral 1 denotes a workpiece being a piece of work to be machined and reference numeral 17 denotes a collision prevention device.

Further, the machine tool has the workpiece shape measurement device. As shown in Fig. 1, the workpiece shape measurement device includes a wide-range sensor (wide-range measuring means) 11, a high-accuracy sensor (high-accuracy measuring means) 12, a first workpiece model generator (first workpiece shape generating means) 13, a second workpiece model generator (second workpiece shape generating means) 14, a workpiece model integrator (third workpiece shape generating means) 15, and a workpiece shape display unit-measurement portion designation unit (workpiece shape displaying means and measurement portion designation means) 16.

The wide-range sensor 11 is a device which has lower measurement accuracy than that of the high-accuracy sensor 12 and has a measurement range V₁₁ being wider than a measurement range V₁₂ of the high-accuracy sensor 12, thereby being capable of performing measurement over a wide range (see parts (a) and (c) of Fig. 3). A device which performs measurement by using a laser, a radio wave, or the like can be given as an example of the wide-range sensor 11. The wide-range sensor 11 is attachable to the ram 6 of the machine tool via an arbor (not illustrated) and is detachable therefrom. The wide-range sensor 11 outputs measurement data of the workpiece 1 to the first workpiece model generator 13.

The high-accuracy sensor 12 is a device which has the measurement range V₁₂ being narrower than the measurement range V₁₁ of the wide-range sensor 11 and has higher measurement accuracy than that of the wide-range sensor 11, thereby being capable of performing measurement with high accuracy (see parts (a) and (c) of Fig. 3). A device which performs measurement by using a laser, a radio wave, or the like can be given as an example of the high-accuracy sensor 12. The high-accuracy sensor 12 is attachable to the ram 6 of the machine tool via an arbor (not illustrated) and is detachable therefrom. The high-accuracy sensor 12 outputs measurement data of the workpiece 1 to the second workpiece model generator 14. Moreover, the high-accuracy sensor 12 has a function of measuring only a measurement portion in an approximate three-dimensional shape of the workpiece 1, the measurement portion designated based on data D12 to be described later in detail.

The first workpiece model generator 13 is a device which generates the approximate three-dimensional shape of the workpiece 1 on the basis of the data of the workpiece 1 obtained by the wide-range sensor 11. The first workpiece model generator 13 outputs data D1 on the generated approximate three-dimensional shape of the workpiece 1 to the workpiece model integrator 15. Moreover, the first workpiece model generator 13 outputs data D11 on the approximate three-dimensional shape of the workpiece 1 to the workpiece shape display unit-measurement portion designation unit 16.

The second workpiece model generator 14 is a device which generates a high-accuracy three-dimensional shape of the workpiece 1 on the basis of the data of the workpiece 1 obtained by the high-accuracy sensor 12. The second workpiece model generator 14 outputs data D2 on the generated high-accuracy three-dimensional shape of the workpiece 1 to the workpiece model integrator 15.

The workpiece model integrator 15 is a device which generates an overall three-dimensional shape of the workpiece 1 on the basis of the data D1 and the data D2 by replacing a portion of the approximate three-dimensional shape of the workpiece 1 with the high-accuracy three-dimensional shape of the workpiece 1, the portion matching the high-accuracy three-dimensional shape of the workpiece 1. The workpiece model integrator 15 outputs data D3 on the generated overall three-dimensional shape of the workpiece 1 to the collision prevention device 17.

The workpiece shape display unit-measurement portion designation unit 16 has a function of displaying the data D11 and a function of designating the measurement portion (measurement region) in the displayed approximate three-dimensional shape of the workpiece 1. The workpiece shape display unit-measurement portion designation unit 16 outputs the data D12 on the designated measurement portion to the high-accuracy sensor 12.

The collision prevention device 17 is a device which checks for interference between the workpiece 1 and machine parts (for example, a tool (not illustrated), the ram 6, and the like) and between the machine parts (for example, the tool and the table 2) on the basis of the overall three-dimensional shape of the workpiece 1 obtained from the data D3 and a NC program of a numerical control device which is not illustrated. When it is judged that the overall three-dimensional shape of the workpiece 1 and the machine parts of the machine tool or the machine parts of the machine tool interfere with each other, the collision prevention device 17, for example, can activate an alarm device (not illustrated) to generate an alarm.

The control flow of the workpiece shape measurement device for a machine tool with the aforementioned configuration is specifically described with reference to Fig. 2 and Fig. 3. In the control flow, the workpiece 1 is fixed to the table 2 of the machine tool in advance and the wide-range sensor 11 and the high-accuracy sensor 12 are in a state mountable to the ram 6. Here, descriptions are given of the case where a center portion of the workpiece 1 is measured by the high-accuracy sensor 12.

First, as shown in Fig. 2, the wide-range sensor 11 is mounted to the ram 6 of the machine tool and the shape of the workpiece 1 is measured by using the wide-range sensor 11 in step S11. Then, the wide-range sensor 11 outputs the obtained data to the first workpiece model generator 13.

Next, in step S12, the first workpiece model generator 13 generates the approximate three-dimensional shape of the workpiece 1 on the basis of the aforementioned data (data obtained by the wide-range sensor 11). For example, as shown in part (b) of Fig. 3, the first workpiece model generator 13 generates an approximate three-dimensional shape M11 of the workpiece 1 which is a shape slightly larger than the actual shape of the workpiece 1. Then, the first workpiece model generator 13 outputs the data D1 on the approximate three-dimensional shape M11 of the workpiece 1 to the workpiece model integrator 15. The first workpiece model generator 13 also outputs the data D11 on the approximate three-dimensional shape M11 of the workpiece 1 to the workpiece shape display unit-measurement portion designation unit 16.

Subsequently, in step S13, the work piece shape display unit-measurement portion designation unit 16 checks for the workpiece model (approximate three-dimensional shape M11 of the workpiece 1) obtained in step 12, and selects (designates) a portion of the workpiece model where high accuracy is required, or the center portion of the workpiece 1 in this case. The workpiece shape display unit-measurement portion designation unit 16 outputs the data D12 on the designated measurement portion to the high-accuracy sensor 12.

Next, in step S14, the high-accuracy sensor 12 is mounted to the ram 6 of the machine tool and the shape of the workpiece 1 is measured by using the high accuracy sensor 12 in terms of the portion where high accuracy is required on the basis of the data 12 obtained in step S13. Then, the high-accuracy sensor 12 outputs the obtained data to the second workpiece model generator 14.

Subsequently, in step S15, the second workpiece model generator 14 generates the high-accuracy three-dimensional shape of the workpiece 1 on the basis of the aforementioned data (data obtained by the high-accuracy sensor 12). For example, as shown in part (d) of Fig. 3, the second workpiece model generator 14 generates a high-accuracy three-dimensional shape M12 of the workpiece 1 which is a shape matching the actual shape of the workpiece 1. Then, the second workpiece model generator 14 outputs the data D2 on the high-accuracy three-dimensional shape M12 of the workpiece 1 to the workpiece model integrator 15.

Next, in step S16, the workpiece model integrator 15 integrates the approximate three-dimensional shape M11 of the workpiece 1 generated by the first workpiece model generator 13 with the high-accuracy three-dimensional shape M12 of the workpiece 1 generated by the second workpiece model generator 14 and thereby generates the overall three-dimensional shape of the workpiece 1. Specifically, the workpiece model integrator 15 generates the overall three-dimensional shape of the workpiece 1 on the basis of the approximate three-dimensional shape M11 of the workpiece 1 and the high-accuracy three-dimensional shape M12 of the workpiece 1 by replacing a portion in the approximate three-dimensional shape M11 of the workpiece 1 with the high-accuracy three dimensional shape M12 of the workpiece 1, the portion matching the high-accuracy three-dimensional shape M12 of the workpiece 1 (see, for example, part (d) of Fig. 3).

In the workpiece shape measurement device for a machine tool of the embodiment, the three-dimensional shape of the workpiece 1 is measured with the high-accuracy sensor 12 only for a predetermined portion and the three-dimensional shape of the workpiece 1 is measured with the wide-range sensor 11 for portions other than the predetermined portion. This enables reduction in measurement time compared to the case where only the high-accuracy sensor 12 is used. Moreover, there is no need to prepare data on the three-dimensional shape of the workpiece 1 in advance and measurement with high accuracy can be performed for the predetermined portion.

### [SECOND EMBODIMENT]

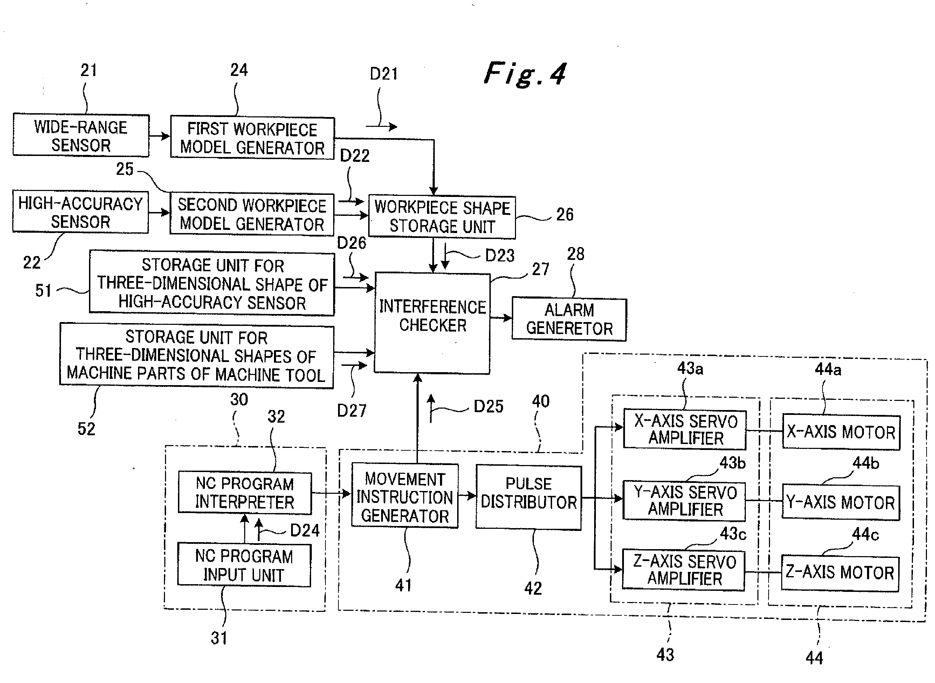

A second embodiment of a workpiece shape measurement device for a work tool of the present invention is specifically described with reference to Fig. 4, Fig. 5, and Fig. 6.

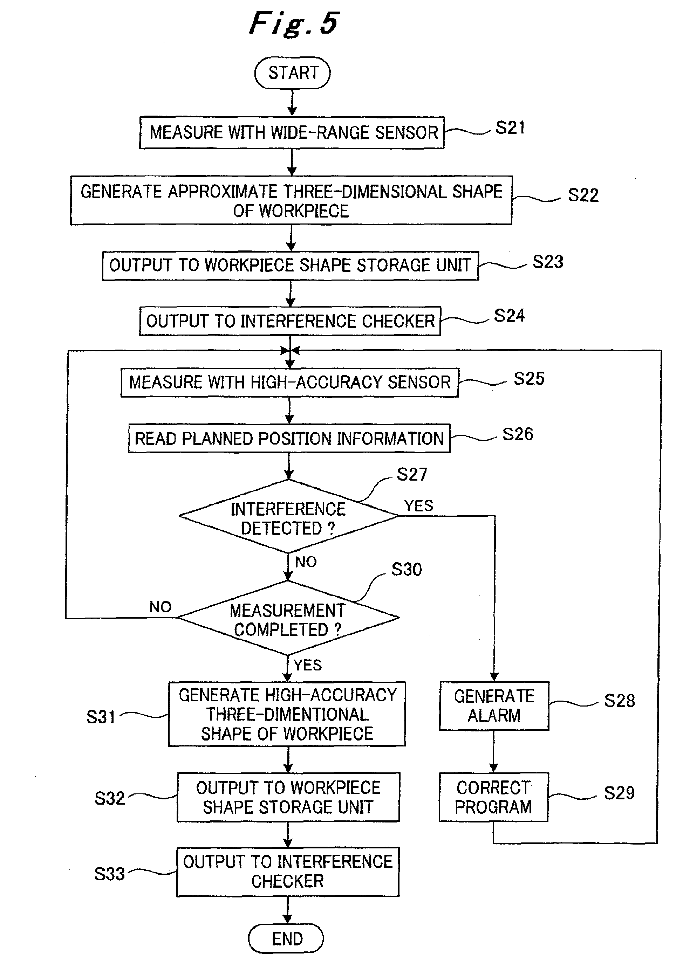

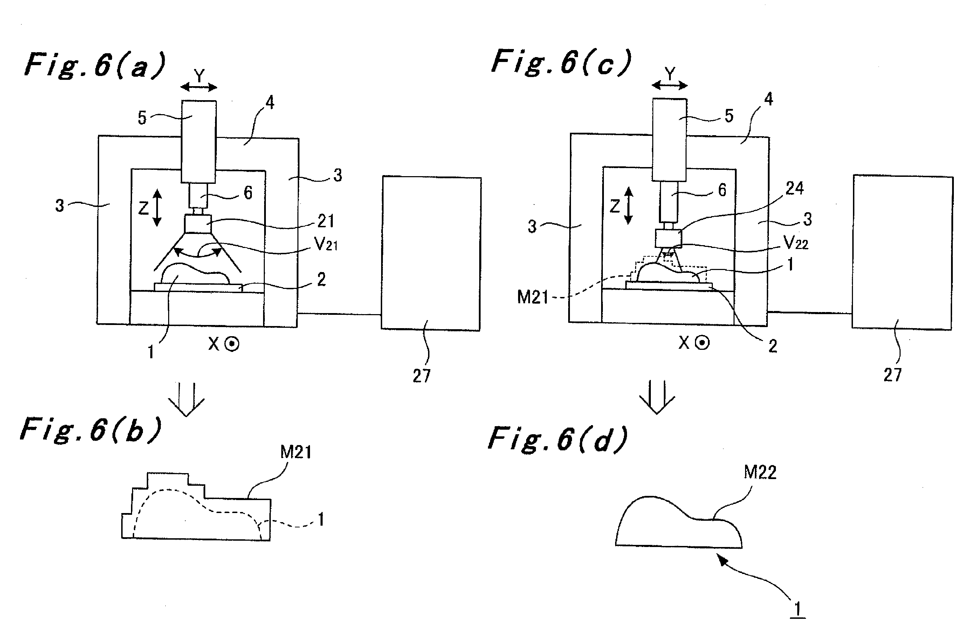

Fig. 4 is a block diagram of the workpiece shape measurement device for a machine tool of the second embodiment of the present invention. Fig. 5 is a diagram showing a control flow of the workpiece shape measurement device. Fig. 6 includes explanatory views of the workpiece shape measurement device for a machine tool of the second embodiment of the present invention. Part (a) of Fig. 6 shows a state where a wide-range sensor is mounted to a ram, part (b) of Fig. 6 shows an approximate shape of a workpiece which is based on measurement data from the wide-range sensor, part (c) of Fig. 6 shows a state where a high-accuracy sensor is mounted to the ram, and part (d) of Fig. 6 shows a high-accuracy shape of the workpiece which is based on measurement data from the high-accuracy sensor.

In this embodiment, descriptions are given of the case where the workpiece shape measurement device includes the wide-range sensor, the high-accuracy sensor, and an interference checker and the high-accuracy three-dimensional shape of the workpiece is measured with the high-accuracy sensor on the basis of data on an approximate three-dimensional shape of the workpiece which is obtained by performing measurement with the wide-range sensor, data on a three-dimensional shape of the high-accuracy sensor, and data on three-dimensional shapes of machine parts of the machine tool. Moreover, the embodiment shows the case where the present invention is applied to a double-column type machine tool as similar to the workpiece shape measurement device for a machine tool of the first embodiment described above. The same devices as those in the first embodiment are denoted by the same reference numerals and descriptions thereof are omitted.

The machine tool of the embodiment has the workpiece shape measurement device. As shown in Fig. 4, the workpiece shape measurement device includes a wide-range sensor (wide-range measuring means) 21, a high-accuracy sensor (high-accuracy measuring means) 22, an interference checker 27, a NC (numerical control device) 30, a movement control mechanism 40, and the like.

The NC 30 has a NC program input unit 31 to which a NC program D24 is inputted and a NC program interpreter 32 which converts the inputted NC program D24 and outputs the converted data to a movement instruction generator 41 of the movement control mechanism 40. A program for a movement trajectory of the wide-range sensor 21, a program for a movement trajectory of the high-accuracy sensor 22, and the like can be given as an example of the NC program D24.

The movement control mechanism 40 includes the movement instruction generator 41, a pulse distributor 42, servo amplifiers 43, and motors 44. The movement instruction generator 41 is a device which generates a movement instruction on the basis of the data outputted from the NC program interpreter 32 and outputs the generated movement instructions one after another to the pulse distributor 42. Moreover, the movement instruction generator 41 also outputs pieces of data D25 on the generated movement instructions one after another to the interference checker 27. The pulse distributor 42 is a device which performs distribution to the servo amplifiers 43 controlling the motors 44 for the axes on the basis of the movement instructions described above. The servo amplifiers 43 are provided respectively for the axes and include an X-axis servo amplifier 43a, a Y-axis servo amplifier 43b, and a Z-axis servo amplifier 43c. The motors 44 are also provided respectively for the axes and include an X-axis motor 44a, a Y-axis motor 44b, and a Z-axis motor 44c.

The wide-range sensor 21 is a device which has lower measurement accuracy than that of the high-accuracy sensor 22 and has a measurement range V₂₁ being wider than a measurement range V₂₂ of the high-accuracy sensor 22, thereby being capable of performing measurement over a wide range (see parts (a) and (c) of Fig. 6). A device which performs a measurement by using a laser, a radio wave, or the like can be given as an example of the wide-range sensor 21. The wide-range sensor 21 is attachable to a ram 6 of the machine tool via an arbor (not illustrated) and is detachable therefrom. The wide-range sensor 21 outputs measurement data of the workpiece 1 to a first workpiece model generator 24.

The high-accuracy sensor 22 is a device which measures the shape of the workpiece 1, has the measurement range V₂₂ being narrower than the measurement range V₂₁ of the wide-range sensor 21, and has higher measurement accuracy than that of the wide-range sensor 21, thereby being capable of performing measurement with high accuracy (see parts (a) and (c) of Fig. 6). A device which performs measurement by using a laser, a radio wave, or the like can be given as an example of the high-accuracy sensor 22. The high-accuracy sensor 22 is attachable to the ram 6 of the machine tool via an arbor (not illustrated) and is detachable therefrom. The high-accuracy sensor 22 outputs measurement data of the workpiece 1 to a second workpiece model generator 25.

The first workpiece model generator 24 is a device which generates the approximate three-dimensional shape of the workpiece 1 on the basis of the data of the workpiece 1 obtained by the wide-range sensor 21 and outputs data D21 on the generated approximate three-dimensional shape of the workpiece 1 to a workpiece shape storage unit 26.

The second workpiece model generator 25 is a device which generates a high-accuracy three-dimensional shape of the workpiece 1 on the basis of the data of the workpiece 1 obtained by the high-accuracy sensor 22 and outputs data D22 on the generated high-accuracy three-dimensional shape of the workpiece 1 to the workpiece shape storage unit 26.

The workpiece shape storage unit 26 is a device which stores the data D21 and the data D22. Specifically, when the data D21 is inputted from the first workpiece model generator 24, the workpiece shape storage unit 26 stores the data D21. When the data D22 is inputted from the second workpiece model generator 25 subsequent to the data D21, the workpiece shape storage unit 26 stores the data D22 in replacement of the previously stored data D21. Then, the workpiece shape storage unit 26 outputs stored data D23 to the interference checker 27.

The interference checker 27 is connected to a storage unit 51 for the three-dimensional shape of the high-accuracy sensor and a storage unit 52 for the three-dimensional shapes of the machine parts (for example, a table 2, a fixture (not illustrated) for the workpiece 1, and the like) of the machine tool, in addition to the workpiece shape storage unit 26 and the movement instruction generator 41. Data D26 on the three-dimensional shape of the high-accuracy sensor 22 and data D27 on the three-dimensional shapes of the machine parts (for example, the table 2, the fixture (not illustrated) for the workpiece 1, and the like) of the machine tool are thus inputted into the interference checker 27 in addition to the data D23 and the data D25.

When the measurement of the workpiece shape is started by the high-accuracy sensor 22, the interference checker 27 judges whether there is interference between the high-accuracy sensor 22 and the workpiece 1 and judges whether there is interference between the high-accuracy sensor 22 and the machine parts of the machine tool on the basis of the data D23, D25, D26, and D27 described above. When it is judged that there is interference, an alarm is generated by an alarm generator 28. Meanwhile, when it is judged that there is no interference, the interference checker 27 continuously performs the aforementioned judgment of whether there is interference while the measurement of the workpiece shape is performed by the high-accuracy sensor 22.

The control flow of the workpiece shape measurement device for a machine tool with the aforementioned configuration is specifically described with reference to Fig. 5 and Fig. 6. In the control flow, the workpiece 1 is fixed to the table 2 of the machine tool in advance and the wide-range sensor 21 and the high-accuracy sensor 22 are in a state mountable to the ram 6 of the machine tool. Here, descriptions are given of the case where the entire workpiece 1 is measured by the high-accuracy sensor 22.

First, as shown in Fig. 5, the wide-range sensor 21 is mounted to the ram 6 of the machine tool and the shape of the workpiece 1 is measured by using the wide-range sensor 21 in step S21. Then, the wide-range sensor 21 outputs the obtained data to the first workpiece model generator 24.

Next, in step S22, the first workpiece model generator 24 generates the approximate three-dimensional shape of the workpiece 1 on the basis of the aforementioned data (data obtained by the wide-range sensor 21). For example, as shown in part (b) of Fig. 6, the first workpiece model generator 24 generates an approximate three-dimensional shape M21 of the workpiece 1 which is a shape slightly larger than the actual shape of the workpiece 1.

Then, in step S23, the first workpiece model generator 24 outputs the data D21 on the approximate three-dimensional shape M21 of the workpiece 1 to the workpiece shape storage unit 26. The workpiece shape storage unit 26 thus stores the data D21 on the approximate three-dimensional shape of the workpiece 1.

Subsequently, in step S24, the workpiece shape storage unit 26 outputs the stored data D23 on the approximate three-dimensional shape of the workpiece 1 to the interference checker 27. The data D26 on the three-dimensional shape of the high-accuracy sensor 22 and the data D27 on the three-dimensional shapes of the machine parts (for example, the table 2, the fixture (not illustrated) for the workpiece 1, and the like) of the machine tool are inputted to the interference checker 27 in advance.

Next, in step S25, the measurement of the high-accuracy three-dimensional shape of the workpiece 1 with the high-accuracy sensor 22 is started. Specifically, the wide-range sensor 21 is detached and removed from the ram 6 of the machine tool. Meanwhile, the high-accuracy sensor 22 is mounted to the ram 6 of the machine tool and the measurement of the workpiece shape with the high-accuracy sensor 22 is started. Furthermore, the high-accuracy sensor 22 outputs the obtained data to the second workpiece model generator 25.

Then, in step S26, the interference checker 27 reads the data D25 on planned position information of the high-accuracy sensor 22, i.e. the data D25 on the movement instruction of the high-accuracy sensor 22 outputted from the movement instruction generator 41.

Subsequently, in step S27, the interference checker 27 judges whether there is interference between the high-accuracy sensor 22 and the workpiece 1 and judges whether there is interference between the high-accuracy sensor 22 and the machine parts (for example, the table 2, the fixture (not illustrated) for the workpiece 1, and the like) of the machine tool. Specifically, the interference checker 27 judges whether there is interference between the high-accuracy sensor 22 and the workpiece 1 and between the high-accuracy sensor 22 and the other machine parts (for example, the table 2, the fixture for the workpiece 1, and the like) of the machine tool, on the basis of the data D23 outputted from the workpiece shape storage unit 26, the data D25 on the planned position information of the high-accuracy sensor 22, the data D26 on the three-dimensional shape of the high-accuracy sensor 22, and the data D27 on the three-dimensional shapes of the machine parts (for example, the table 2, the fixture (not illustrated) for the workpiece 1, and the like) of the machine tool. When the interference checker 27 judges that there is interference, the flow proceeds to step S28. Meanwhile, when the interference checker 27 judges that there is no interference, the flow proceeds to step S30.

Next, in step S28, the interference checker 27 causes the alarm generator 28 to generate an alarm.

Then, in step S29, a portion in the program for the movement trajectory of the high-accuracy sensor 22 is corrected, the portion corresponding to a position judged to cause the interference. Next, the corrected program is inputted into the NC program input unit 31, then data generated in the NC program interpreter 32 is outputted to the movement instruction generator 41, and the data D25 newly generated by the movement instruction generator 41 is outputted to the interference checker 27. Subsequently, after the processing of step S29 is completed, the flow returns to step S25. Specifically, when it is judged that there is interference, the interference checker 27 causes the alarm generator 28 to generate an alarm and at the same time judges again whether there is interference between the high-accuracy sensor 22 and the workpiece 1 and between the high-accuracy sensor 22 and the other machine parts (for example, the table 2, the fixture (not illustrated) for the workpiece 1, and the like) of the machine tool, on the basis of the new data D25 from the movement instruction generator 41 which is based on the corrected NC program, as well as the data D23, D26, and D27.

Next, in step S30, the interference checker 27 judges whether the measurement of the shape of the workpiece 1 with the high-accuracy sensor 22 is completed. Specifically, the interference checker 27 detects whether there is an input of the data D25 from the movement instruction generator 41. When there is the input of the data D25, the interference checker 27 judges that there is a position to be measured and the flow returns to step S25. Specifically, when it is judged that the measurement of the shape of the workpiece 1 with the high-accuracy sensor 22 is not completed, the interference checker 27 continuously judges whether there is interference between the high-accuracy sensor 22 and the workpiece 1 and between the high-accuracy sensor 22 and the other machine parts (for example, the table 2, the fixture (not illustrated) for the workpiece 1, and the like) of the machine tool, on the basis of the data D23, D25, D26, and D27. Meanwhile, when there is no input of the data D25 after an elapse of a predetermined time, the interference checker 27 judges that the measurement of the workpiece shape with the high-accuracy sensor 22 is completed and the flow proceeds to step S31.

Then, in step S31, the second workpiece model generator 25 generates the high-accuracy three-dimensional shape of the workpiece 1 on the basis of the aforementioned data (data obtained by the high-accuracy sensor 22). For example, as shown in part (d) of Fig. 6, the second workpiece model generator 25 generates a high-accuracy three-dimensional shape M22 of the workpiece 1 which is a shape matching the actual shape of the workpiece 1.

Next, in step S32, the second workpiece model generator 25 outputs the data D22 on the high-accuracy three-dimensional shape M22 to the workpiece shape storage unit 26. Then, the workpiece shape storage unit 26 stores the data D22 in replacement of the previously stored data D23 (the data D21 on the approximate three-dimensional shape of the workpiece 1).

Subsequently, in step S33, the second workpiece model generator 25 outputs the stored data D23 (the data D22 on the high-accuracy three-dimensional shape of the workpiece 1) to the interference checker 27 and the flow is terminated.

Accordingly, the workpiece shape measurement device for a machine tool of the embodiment allows avoidance of the interference between the workpiece 1 and the high-accuracy sensor 22 by including the interference checker 27 which judges interference between the workpiece 1 and the high-accuracy sensor 22 on the basis of the data D21 on the approximate three-dimensional shape of the workpiece 1 generated by the first workpiece model generator 21, the data (data on the planned position information of the high-accuracy sensor 22) D25 generated by the movement instruction generator 41, and the data D26 on the three-dimensional shape of the high-accuracy sensor 22.

The data D27 on the three-dimensional shapes of the machine parts of the machine tool such as the table 2 and the fixture for the workpiece 1 are also inputted into the interference checker 27. Thus, the interference between the high-accuracy sensor 22 and the machine parts of the machine tool such as the table 2 and the fixture for the workpiece 1 can be also avoided.

### [OTHER EMBODIMENTS]

In the first embodiment described above, the descriptions are given by using the workpiece shape measurement device for a machine tool which includes the first workpiece model generator 13 and the second workpiece model generator 14. However, the workpiece shape measurement device for a machine tool may be configured to include a workpiece model generator which has both the function of generating the approximate three-dimensional shape of the workpiece 1 on the basis of the measurement data from the wide-range sensor 11 and the function of generating the high-accuracy three-dimensional shape of the workpiece 1 on the basis of the measurement data from the high-accuracy sensor 12. In the second embodiment described above, the descriptions are given by using the workpiece shape measurement device for a machine tool which includes the first workpiece model generator 24 and the second workpiece model generator 25. However, the workpiece shape measurement device for a machine tool may be configured to include a workpiece model generator which has both the function of generating the approximate three-dimensional shape of the workpiece 1 on the basis of the measurement data from the wide-range sensor 21 and the function of generating the high-accuracy three-dimensional shape of the workpiece 1 on the basis of the measurement data from the high-accuracy sensor 22. Such workpiece shape measurement devices for a machine tool also have similar effects to those of the aforementioned workpiece shape measurement devices for a machine tool of the first and second embodiments.

In the second embodiment described above, the descriptions are given of the case where it is judged whether there is interference between the high-accuracy sensor 22 and the workpiece 1 and between the high-accuracy sensor 22 and the machine parts of the machine tool. However, the embodiment can be applied to the case where it is judged whether there is interference between a tool and the workpiece and between the tool and the other machine parts of the machine tool.

### INDUSTRIAL APPLICABILITY

In the workpiece shape measurement device for a machine tool of the present invention, measurement can be performed in a shorter time than the case of using only the high-accuracy senor while the predetermined portion can be measured with high accuracy. Thus, the workpiece shape measurement device can be used effectively in the machine tool industry and the like.

The workpiece shape measurement device for a machine tool of the present invention allows avoidance of the interference between the workpiece and the high-accuracy sensor. Thus, the workpiece shape measurement device can be used effectively in the machine tool industry and the like.

### EXPLANATION OF REFERENCE NUMERALS

- 1: workpiece
- 2: table
- 3: column
- 4: cross rail
- 5: saddle
- 6: ram
- 11, 21: wide-range sensor
- 12, 22: high-accuracy sensor
- 13, 24: first workpiece model generator
- 14, 25: second workpiece model generator
- 15: workpiece model integrator
- 16: workpiece shape display unit-measurement portion designation unit
- 17: collision prevention device
- 26: workpiece shape storage unit
- 27: interference checker
- 28: alarm generator
- 30: NC (numerical control device)
- 31: NC program input unit
- 32: NC program interpreter
- 40: movement control mechanism
- 41: movement instruction generator
- 42: pulse distributor
- 43: servo amplifier
- 43a: X-axis servo amplifier
- 43b: Y-axis servo amplifier
- 43c: Z-axis servo amplifier
- 44: motor
- 44a: X-axis motor
- 44b: Y-axis motor
- 44c: Z-axis motor
- 51: storage unit for three-dimensional shape of high-accuracy sensor
- 52: storage unit for three-dimensional shapes of machine parts of machine tool
- D1 to D3, D11, D12, D21 to D23, D25 to D27: data
- V₁₁, V₁₂, V₂₁, V₂₂: measurement range

## Claims

1. A workpiece shape measurement device for a machine tool, configured to measure a shape of a workpiece (1) fixed to a table (2) of a machine tool, wherein the workpiece shape measurement device comprises:
wide-range measuring means (11) capable of performing measurement over a wide range;
first workpiece shape generating means (13) for generating an approximate three-dimensional shape (M11) of the workpiece (1) on the basis of data measured by the wide-range measuring means (11);
high-accuracy measuring means (12) capable of performing measurement with high-accuracy;
second workpiece shape generating means (14) for generating a high-accuracy three-dimensional shape (M12) of the workpiece (1) on the basis of data measured by the high-accuracy measuring means (12);
workpiece shape display means (16) for displaying the approximate three-dimensional shape (M11) of the workpiece (1) ;
measurement portion designation means (16) for designating a measurement portion in the approximate three-dimensional shape (M11) of the workpiece (1) displayed on the workpiece shape display means (16), the measurement portion being a portion to be measured by the high-accuracy measuring means (12); and
third workpiece shape generating means (15) for generating an overall three-dimensional shape of the workpiece (1) on the basis of the approximate three-dimensional shape (M11) of the workpiece (1) and the high-accuracy three-dimensional shape (M12) of the workpiece (1), by replacing a portion in the approximate three-dimensional shape (M11) of the workpiece (1) with the high-accuracy three-dimensional shape (M12) of the workpiece (1), the portion matching the high-accuracy three-dimensional shape (M12) of the workpiece (1).

## Patentansprüche

1. Eine Vorrichtung zum Messen der Form eines Werkstücks für eine Werkzeugmaschine, die konfiguriert ist, um eine Form eines Werkstücks (1) zu messen, welches an einem Tisch (2) einer Werkzeugmaschine befestigt ist, wobei die Vorrichtung zum Messen der Form des Werkstücks aufweist:
ein Weitbereichs-Messmittel (11), das eine Messung über einem weiten Bereich ausführen kann,
ein erstes Werkstückform-Erzeugungsmittel (13) zum Erzeugen einer angenäherten drei-dimensionalen Form (M11) des Werkstücks (1) auf der Basis von durch das Weitbereichs-Messmittel (11) gemessenen Daten,
ein hochgenaues Messmittel (12), das eine Messung mit hoher Genauigkeit ausführen kann,
ein zweites Werkstückform-Erzeugungsmittel (14) zum Erzeugen einer hochgenauen drei-dimensionalen Form (M12) des Werkstücks (1) auf der Basis von durch das hochgenaue Messmittel (12) gemessenen Daten,
ein Werkstückform-Anzeigemittel (16) zum Anzeigen der angenäherten drei-dimensionalen Form (M11) des Werkstücks (1),
ein Messabschnitt-Auswahlmittel (16) zum Auswählen eines Messabschnitts in der angenäherten drei-dimensionalen Form (M11) des Werkstücks (1), das auf dem Werkstückform-Anzeigemittel (16) angezeigt wird, wobei der Messabschnitt ein Abschnitt ist, der von dem hochgenauen Messmittel (12) zu messen ist, und
ein drittes Werkstückform-Erzeugungsmittel (15) zum Erzeugen einer gesamten drei-dimensionalen Form des Werkstücks (1) auf der Basis der angenäherten drei-dimensionalen Form (M11) des Werkstücks (1) und der hochgenauen drei-dimensionalen Form (M12) des Werkstücks (1) durch Ersetzen eines Abschnitts in der angenäherten drei-dimensionalen Form (M11) des Werkstücks (1) mit der hochgenauen drei-dimensionalen Form (M12) des Werkstücks (1), wobei der Abschnitt zu der hochgenauen drei-dimensionalen Form (M12) des Werkstücks (1) passt.

## Revendications

1. Dispositif de mesure de forme de pièce à usiner pour une machine-outil, configuré pour mesurer une forme d'une pièce à usiner (1) fixée à une table (2) d'une machine-outil, dans lequel le dispositif de mesure de forme de pièce à usiner comprend :
des moyens de mesure sur une large gamme (11) capables de réaliser une mesure sur une large gamme ;
des premiers moyens de génération de forme de pièce à usiner (13) pour générer une forme tridimensionnelle approximative (M11) de la pièce à usiner (1) sur la base des données mesurées par les moyens de mesure sur une large gamme (11) ;
des moyens de mesure de grande précision (12) capables de réaliser une mesure avec une grande précision ;
des deuxièmes moyens de génération de forme de pièce à usiner (14) pour générer une forme tridimensionnelle de grande précision (M12) de la pièce à usiner (1) sur la base de données mesurées par les moyens de mesure de grande précision (12) ;
des moyens d'affichage de forme de pièce à usiner (16) pour afficher la forme tridimensionnelle approximative (M11) de la pièce à usiner (1) ;
des moyens de désignation d'une portion de mesure (16) pour désigner une portion de mesure dans la forme tridimensionnelle approximative (M11) de la pièce à usiner (1) affichée sur les moyens d'affichage de forme de pièce à usiner (16), la portion de mesure étant une portion devant être mesurée par les moyens de mesure de grande précision (12) ; et
des troisièmes moyens de génération de forme de pièce à usiner (15) pour générer une forme tridimensionnelle globale de la pièce à usiner (1) sur la base de la forme tridimensionnelle approximative (M11) de la pièce à usiner (1) et de la forme tridimensionnelle de grande précision (M12) de la pièce à usiner (1), en remplaçant une portion dans la forme tridimensionnelle approximative (M11) de la pièce à usiner (1) par la forme tridimensionnelle de grande précision (M12) de la pièce à usiner (1), la portion correspondant à la forme tridimensionnelle de haute précision (M12) de la pièce à usiner (1).
